# EUROPÄISCHE PATENTSCHRIFT

(11) **EP 1 425 084 B1**
(45) Veröffentlichungstag und Bekanntmachung des Hinweises auf die Patenterteilung: **08.12.2010**
(21) Anmeldenummer: 02754519.3
(22) Anmeldetag: 10.08.2002
(51) Int. Cl.: B01D 53/94, B01D 53/90, B01D 53/96, B01D 53/92

(54) **VERFAHREN UND VORRICHTUNG ZUR ABGASNACHBEHANDLUNG**
METHOD AND DEVICE FOR AFTER-TREATMENT OF EXHAUST GAS
PROCEDE ET DISPOSITIF POUR RETRAITER DES GAZ D'ECHAPPEMENT

(30) Priorität: 31.08.2001 DE 10142801
(43) Veröffentlichungstag der Anmeldung: 09.06.2004
(73) Patentinhaber: ROBERT BOSCH GMBH, 70442 Stuttgart (DE)
(72) Erfinder: BREUER, Norbert, 71254 Ditzingen (DE); PFENDTNER, Reinhard, 74321 Bietigheim-Bissingen (DE); FISCHER, Stefan, 96215 Lichtenfels (DE)
(86) Internationale Anmeldenummer: PCT/DE2002/002943
(87) Internationale Veröffentlichungsnummer: WO 2003/026778

(56) Entgegenhaltungen:
- WO-A-00/21646
- WO-A-02/42615
- DE-A- 19 826 831
- US-A- 5 746 984

## Beschreibung

### Stand der Technik

Die Erfindung geht aus von einem Verfahren beziehungsweise einer Vorrichtung zur Nachbehandlung des Abgases einer Brennkraftmaschine nach der Gattung der unabhängigen Ansprüche. Es ist schon eine solche Vorrichtung aus der DE 198 26 831 bekannt, bei der im Abgasstrang vor einem Partikelfilter ein Plasmareaktor angeordnet ist, der jedoch beispielsweise unabhängig vom Betriebszustand des Motors stets in der gleichen Weise betrieben wird.

### Vorteile der Erfindung

Das erfindungsgemäße Verfahren beziehungsweise die erfindungsgemäße Vorrichtung mit den kennzeichnenden Merkmalen der unabhängigen Ansprüche haben demgegenüber den Vorteil, eine energieeffiziente Abgasnachbehandlung zu gewährleisten.

Insbesondere vorteilhaft ist es, eine Rußverbrennung mit je nach Abgastemperatur verschiedenen Oxidationsmitteln durchzuführen und nur bei niedrigen Temperaturen das energetisch aufwendig bereitzustellende, aber auch bei diesen tiefen Temperaturen wirksame Ozon zu verwenden.

Weitere Vorteile ergeben sich durch die weiteren in den abhängigen Ansprüchen und in der Beschreibung genannten Merkmale.

### Zeichnung

Figur 1 zeigt eine Vorrichtung zur Abgasnachbehandlung,
Figur 2 ein Diagramm und Figur 3 ein Verfahren.

### Beschreibung der Ausführungsbeispiele

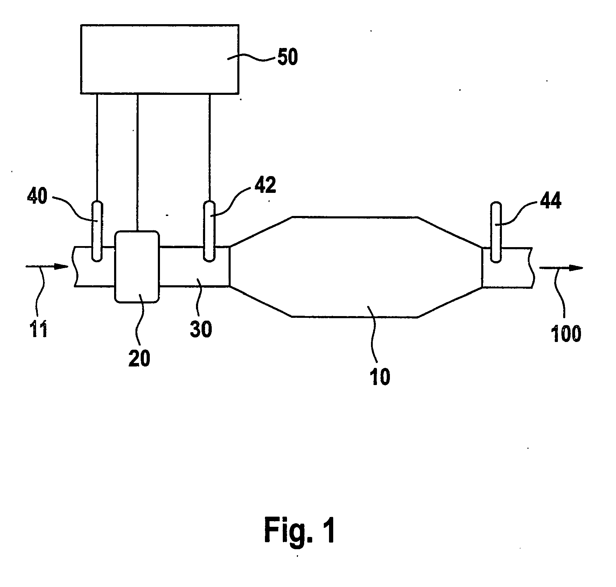

Figur 1 zeigt eine Abgasleitung 30, in der eine als Partikelfilter ausgeführte Abgasnachbehandlungseinheit 10 angeordnet ist. Bevor das von der Dieselbrennkraftmaschine stammende Abgas 11 in das Partikelfilter gelangen kann, muß es einen als Plasmareaktor ausgeführten Oxidationsreaktor 20 durchströmen. Hinter dem Partikelfilter verlässt gereinigtes Abgas 100 (beispielsweise nach Durchlaufen eines nicht dargestellten Schalldämpfers) den Abgastrakt und gelangt ins Freie. Unmittelbar vor und hinter dem Partikelfilter sind in die Abgasleitung hineinragende Druckfühler 42 beziehungsweise 44 angebracht, die mit einem Steuergerät 50 signaltechnisch, beispielsweise elektrisch, verbunden sind. Stromaufwärts vor dem Oxidationsreaktor ragt ein Temperaturfühler 40 in die Abgasleitung 30, der ebenfalls mit dem Steuergerät verbunden ist. Der Plasmareaktor schließlich steht auch mit dem Steuergerät in elektrischer Verbindung. Die Stromversorgung für die Messfühler beziehungsweise den Oxidationsreaktor sind nicht näher dargestellt. Der Oxidationsreaktor produziert ein nicht-thermisches Plasma in dem hereinströmenden Abgas 11, beispielsweise mittels einer dielektrisch behinderten elektrischen Entladung zwischen zwei Elektroden, deren Energieversorgung über das Steuergerät 50 gesteuert werden kann.

Der Beladungszustand des Partikelfilters kann vom Steuergerät zum Beispiel durch Auswertung der Drucksignale der beiden Druckfühler, also durch die Ermittlung eines Differenzdrucks, ermittelt werden. Wenn der Beladungszustand des Partikelfilters einen bestimmten, im Steuergerät abgespeicherten Wert überschritten hat, veranlasst das Steuergerät das Anlegen einer geeigneten beispielsweise hochfrequenten elektrischen Wechselspannung an den Elektroden des Plasmareaktors, um aus Abgasbestandteilen Oxidationsmittel zu erzeugen, die im Partikelfilter zu einem Abbrand des Rußes und damit zu einer Regeneration des Partikelfilters führen. Wenn der Beladungszustand einen zweiten Wert, der unterhalb des ersten Werts liegt, unterschritten hat, wird der Plasmagenerator wieder ausgeschaltet. Die im eingeschalteten Zustand des Plasmareaktors zugeführte elektrische Energie führt zur Bereitstellung hochenergetischer Elektronen und der Produktion von UV-Licht, was die Entstehung von Radikalen begünstigt. Je nach zugeführter elektrischer Leistung werden dabei hauptsächlich Stickstoffmonoxid-Moleküle zu Stickstoffdioxid oxidiert oder (bei höherer elektrischer Leistung) zusätzlich der im Abgas verbliebene Restsauerstoff zu Ozon oxidiert. Das Steuergerät ist so ausgeführt, dass die elektrische Leistung im Falle einer erforderlichen Regeneration in Abhängigkeit von der Abgastemperatur eingestellt wird. Bei Abgastemperaturen unterhalb eines Temperaturschwellenwerts von 250 Grad Celsius, vorzugsweise unterhalb von 200 Grad Celsius, wird eine höhere elektrische Leistung gewählt, um zusätzlich in größeren Mengen Ozon zu produzieren, während bei Abgastemperaturen oberhalb von 200 Grad Celsius, vorzugsweise oberhalb von 250 Grad Celsius, die Regeneration hinreichend schnell mit Stickstoffdioxid als Oxidationsmittel abläuft, so dass eine niedrigere Leistungsstufe für den Plasmareaktor ausreicht, bei der hauptsächlich Stickstoffdioxid und kaum Ozon produziert wird. Im Bereich zwischen 150 und 250 Grad Celsius Abgastemperatur kann zwischen den beiden Leistungsstufen eine Interpolation erfolgen. Für eine Ozon-Erzeugung wird typischerweise ein elektrischer Energiebetrag von 10 bis 15 Wattstunden pro Gramm Ozon benötigt, so dass für die Rußoxidation mittels Ozon typischerweise zwischen 1 und 300 Joule pro Liter Abgas, insbesondere 10 bis 50 Joule pro Liter Abgas, elektrischer Energieverbrauch anfallen. Die große Spannbreite erklärt sich durch die starke Abhängigkeit vom Typ und von der Auslegung der Brennkraftmaschine. Hinzu kommt die im Niedertemperaturbereich des Abgases parallel ablaufende Konversion von Stickstoffmonoxid zu Stickstoffdioxid mit einem Energiebedarf von 2 bis 200 Joule, insbesondere 5 bis 50 Joule, pro Liter Abgas. Ab 200 Grad Celsius, insbesondere ab 250 Grad Celsius, setzt, wie bereits erwähnt, die Oxidation von Ruß mittels Stickstoffdioxid ein, so dass nur noch der letztgenannte Energiebetrag notwendig ist. Durch die Umschaltung läßt sich der Verbrauch daher erheblich, typischerweise mindestens um 30 Prozent, reduzieren.

In einer alternativen Ausführungsform kann der Temperaturfühler 40 auch zwischen Oxidationsreaktor und Partikelfilter angeordnet sein. Alternativ sind auch andere Messmethoden oder eine modellgestützte Vorhersage der Temperatur über ein im Steuergerät abgespeichertes Motorkennfeld möglich. In einer weiteren alternativen Ausführungsform kann der Plasmagenerator auch kontinuierlich betrieben werden. Dann bedarf es keiner Ermittlung des Abgasgegendrucks, die Druckfühler können entfallen. Alternativ können sie bei kontinuierlicher Betriebsweise des Plasmareaktors zur Detektion anomaler Betriebszustände wie einer Filterverstopfung verwendet werden. Alternativ zu einem gleitenden Übergang zwischen den beiden Leistungsstufen des Plasmareaktors kann auch ein Umschaltpunkt beispielsweise bei 200 Grad Celsius Abgastemperatur gewählt werden, bei dem sprungartig zwischen den beiden Leistungsstufen umgeschaltet wird. In einer weiteren Ausführungsform kann oberhalb von 200 Grad Celsius auf eine Stickoxidkonvertierung geschaltet werden, wenn jedoch 250 Grad Celsius, insbesondere 300 Grad Celsius, überschritten werden, vollständig auf das Plasma verzichtet werden, wenn zusätzlich ein Oxidationskatalysator vorhanden ist, denn eine Stickoxid-Konvertierung mittels Katalysator ist energetisch günstiger als mittels eines Plasmaverfahrens. In weiteren Alternativen kann der Füllgrad des Partikelfilters statt über eine Differenzdruckmessung auch mittels einer Gegendruckmessung über einen einzigen Drucksensor ermittelt werden. Des Weiteren ist es möglich, den Füllgrad mittels eines vor dem Partikelfilter angeordneten Rußsensors und eine zeitliche Integration seines Rußsignals zu bestimmen. Ebenso ist es möglich, im Steuergerät abgespeicherte Motorkennfelddaten hinsichtlich der Rußproduktion auszuwerten und zeitlich zu integrieren.

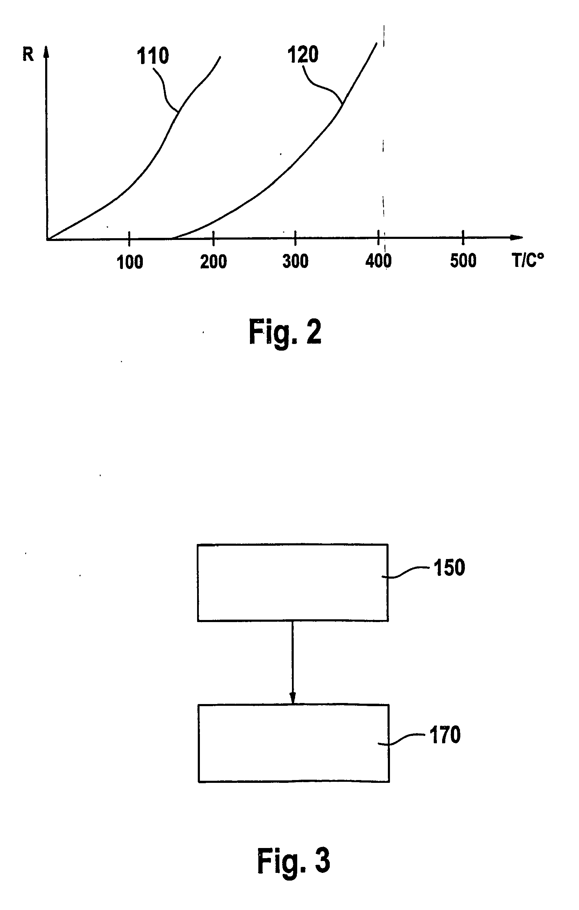

Figur 2 zeigt ein Diagramm, das die Wirksamkeit der beiden verwendeten Oxidationsmittel Ozon und Stickstoffdioxid in einer Auftragung der Rußoxidationsrate R (in willkürlichen Einheiten) über der Abgastemperatur T (in Grad Celsius) illustriert. Die Kurve 110 stellt die Rate für Ozon, die Kurve 120 die Rate für Stickstoffdioxid dar.

Die beiden Kurven sind streng monoton steigend, wobei die Rußoxidation mit Stickstoffdioxid im Vergleich zu Ozon erst bei höheren Abgastemperaturen merklich einsetzt. Mit Ozon als Oxidationsmittel ist, wie Kurve 110 zeigt, die Filterregeneration bei Abgastemperaturen unterhalb von 150 Grad Celsius möglich. Bei Temperaturen oberhalb von 250 Grad Celsius kann die niedrigere Leistungsstufe für den Plasmareaktor gewählt werden, bei der hauptsächlich nur noch Stickstoffdioxid als Oxidationsmittel generiert wird.

Figur 3 illustriert in einem Ablaufdiagramm das Verfahren zur Abgasnachbehandlung mit einem ersten Schritt 150 und einem weiteren Schritt 170.

Im Verfahrensschritt 150 werden zunächst durch Oxidation von im Abgas enthaltenen Stickstoffmonoxid- und/oder Sauerstoff-Molekülen Mittel zur Oxidation erzeugt. Dabei wird in oben beschriebener Weise in Abhängigkeit von der Temperatur des Abgases entweder hauptsächlich Stickstoffdioxid oder zusätzlich auch Ozon in größeren Mengen produziert. Im weiteren Verfahrensschritt 170 erfolgt eine Nachbehandlung des Abgases unter Einsatz der Oxidationsmittel, beispielsweise eine Regeneration des Partikelfilters durch Verbrennung des in ihm angesammelten Rußes.

Eine weitere Ausführungsform der Erfindung umfasst eine Abgasnachbehandlung in Form einer Oxidation von im Abgas befindlichen Kohlenwasserstoffen bei Abgastemperaturen beispielsweise unterhalb von 200 Grad Celsius, insbesondere unterhalb von 150 Grad Celsius.

## Patentansprüche

1. Verfahren zur Nachbehandlung des Abgases einer Brennkraftmaschine, insbesondere einer Dieselbrennkraftmaschine, bei dem in einem ersten Schritt zumindest zeitweise Mittel zur Oxidation bereitgestellt werden und in einem weiteren Schritt eine Nachbehandlung des Abgases erfolgt, **dadurch gekennzeichnet, dass** die Temperatur des Abgases vor der Nachbehandlung bestimmt wird und dass die chemische Zusammensetzung der Mittel zur Oxidation in Abhängigkeit von der Temperatur variiert wird (150).

2. Verfahren nach Anspruch 1, **dadurch gekennzeichnet, dass** als Oxidationsmittel Ozon und/oder Stickstoffdioxid verwendet werden.

3. Verfahren nach einem der vorhergehenden Ansprüche, **dadurch gekennzeichnet, dass** die Oxidationsmittel aus dem Abgas erzeugt werden.

4. Verfahren nach Anspruch 2 oder 3, **dadurch gekennzeichnet, dass** unterhalb eines Temperaturschwellenwerts hauptsächlich Ozon bereitgestellt wird.

5. Verfahren nach einem der vorhergehenden Ansprüche, **dadurch gekennzeichnet, dass** die Mittel zur Oxidation in einem Plasma erzeugt werden.

6. Verfahren nach Anspruch 5, **dadurch gekennzeichnet, dass** als Plasma ein nicht-thermisches Plasma verwendet wird.

7. Verfahren nach einem der vorhergehenden Ansprüche, **dadurch gekennzeichnet, dass** die Nachbehandlung eine Beseitigung von Rußpartikeln und/oder eine Oxidation von Kohlenwasserstoffen umfasst.

8. Verfahren nach Anspruch 4 und 7, **dadurch gekennzeichnet, dass** der Temperaturschwellenwert zirka 200 Grad Celsius beträgt. 1

9. Verfahren nach Anspruch 7 oder 8, **dadurch gekennzeichnet, dass** ein Partikelfilter verwendet wird, dass der Füllgrad des Partikelfilters bestimmt wird und dass in Abhängigkeit des Füllgrads die Mittel zur Oxidation bereitgestellt werden, um zeitweise eine Verbrennung der im Partikelfilter angesammelten Rußpartikel einzuleiten.

10. Vorrichtung zur Nachbehandlung des Abgases einer Brennkraftmaschine, insbesondere einer Dieselbrennkraftmaschine, mit einer Vorrichtung zur Bereitstellung von Mitteln zur Oxidation und einer Abgasnachbehandlungseinheit, **dadurch gekennzeichnet, dass** Mittel zur Bestimmung der Temperatur des Abgases vor dem Eintreten in die Abgasnachbehandlungseinheit (10), insbesondere ein Temperaturfühler zur Messung der Temperatur, vorgesehen sind und dass die Vorrichtung (20) zur Bereitstellung von Mitteln zur Oxidation eingerichtet ist zur Variation der chemischen Zusammensetzung der Mittel zur Oxidation in Abhängigkeit von der Temperatur.

## Claims

1. Method for the aftertreatment of the exhaust gas of an internal combustion engine, in particular of a diesel internal combustion engine, in which method oxidizing agents are provided at least intermittently in a first step, and an aftertreatment of the exhaust gas takes place in a further step, **characterized in that** the temperature of the exhaust gas before the aftertreatment is determined, and **in that** the chemical composition of the oxidizing agents is varied (150) as a function of the temperature.

2. Method according to Claim 1, **characterized in that** ozone and/or nitrogen dioxide are used as oxidizing agents.

3. Method according to one of the preceding claims, **characterized in that** the oxidizing agents are produced from the exhaust gas.

4. Method according to Claim 2 or 3, **characterized in that**, below a temperature threshold value, primarily ozone is provided.

5. Method according to one of the preceding claims, **characterized in that** the oxidizing agents are produced in a plasma.

6. Method according to Claim 5, **characterized in that** a non-thermal plasma is used as a plasma.

7. Method according to one of the preceding claims, **characterized in that** the aftertreatment encompasses an elimination of soot particles and/or an oxidation of hydrocarbons.

8. Method according to Claim 4 and 7, **characterized in that** the temperature threshold value is approximately 200 degrees Celsius.

9. Method according to Claim 7 or 8, **characterized in that** a particle filter is used, **in that** the filling level of the particle filter is determined, and **in that** the oxidizing agents are provided as a function of the filling level in order to intermittently initiate a combustion of the soot particles collected in the particle filter.

10. Device for the aftertreatment of the exhaust gas of an internal combustion engine, in particular of a diesel internal combustion engine, having a device for providing oxidizing agents and having an exhaust-gas aftertreatment unit, **characterized in that** means for determining the temperature of the exhaust gas before it enters the exhaust-gas aftertreatment unit (10), in particular a temperature sensor for measuring the temperature, are provided, and **in that** the device (20) for providing oxidizing agents is set up to vary the chemical composition of the oxidizing agents as a function of the temperature.

## Revendications

1. Procédé pour le post-traitement de gaz d'échappement d'un moteur à combustion interne, notamment d'un moteur à combustion interne diesel, dans lequel, dans une première étape, au moins temporairement, des moyens sont fournis pour l'oxydation et dans une deuxième étape, un post-traitement des gaz d'échappement a lieu, **caractérisé en ce que** la température du gaz d'échappement est déterminée avant le post-traitement et **en ce que** la composition chimique des moyens d'oxydation est modifiée (150) en fonction de la température.

2. Procédé selon la revendication 1, **caractérisé en ce que** l'on utilise comme moyens d'oxydation de l'ozone et/ou du dioxyde d'azote.

3. Procédé selon l'une quelconque des revendications précédentes, **caractérisé en ce que** les moyens d'oxydation sont produits à partir des gaz d'échappement.

4. Procédé selon la revendication 2 ou 3, **caractérisé en ce qu'**en dessous d'une valeur seuil de température, principalement de l'ozone est produit.

5. Procédé selon l'une quelconque des revendications précédentes, **caractérisé en ce que** les moyens d'oxydation sont produits dans un plasma.

6. Procédé selon la revendication 5, **caractérisé en ce que** l'on utilise comme plasma un plasma non thermique.

7. Procédé selon l'une quelconque des revendications précédentes, **caractérisé en ce que** le post-traitement inclut l'élimination des particules de suie et/ou une oxydation des hydrocarbures.

8. Procédé selon les revendications 4 et 7, **caractérisé en ce que** la valeur seuil de température est d'environ 200 degrés Celsius.

9. Procédé selon les revendications 7 ou 8, **caractérisé en ce que** l'on utilise un filtre à particules, **en ce que** le degré de remplissage du filtre à particules est déterminé et **en ce qu'**en fonction du degré de remplissage, les moyens d'oxydation sont fournis pour amorcer temporairement une combustion des particules de suie accumulées dans le filtre à particules.

10. Dispositif pour le post-traitement d'un moteur à combustion interne, notamment d'un moteur à combustion interne diesel, comprenant un dispositif pour fournir des moyens d'oxydation et une unité de post-traitement des gaz d'échappement, **caractérisé en ce que** des moyens pour déterminer la température des gaz d'échappement avant leur entrée dans l'unité de post-traitement des gaz d'échappement (10) sont prévus, notamment un capteur de température pour mesurer la température, et **en ce que** le dispositif (20) pour fournir des moyens d'oxydation est prévu pour faire varier la composition chimique des moyens d'oxydation en fonction de la température.
